# EUROPEAN PATENT APPLICATION

(11) **EP 0 675 666 A1**
(43) Date of publication of application: **04.10.1995**
(21) Application number: 95103556.7
(22) Date of filing: 13.03.1995
(51) Int. Cl.: H04R 1/08, G10H 1/00

(54) **Karaoke microphone**

(30) Priority: 31.03.1994 US 220536
(71) Applicant: Artif Technology Corporation, Hsi-Chin Town, Tapei County (TW)
(72) Inventor: Young, James, Taipei, Taiwan (TW)
(74) Representative: Rottmann, Maximilian R.

(57) **Abstract**

A wireless karaoke microphone which can generate musical accompaniments and the song lyrics by integrating a general MIDI sound source, a CPU, and an LCD into the microphone. Lyrics and MIDI signals of songs can be pre-stored into ROMs so that the microphone can accompany an user and display lyrics without any additional karaoke equipments. This microphone itself constitutes a karaoke system that can be used with any amplification system. An LCD caption display or TV caption system can be attached to the microphone to display lyrics on an LCD or on TV.

## Description

### FIELD OF THE INVENTION

The present invention relates to a wireless microphone, especially to an auto-accompanying wireless microphone, which is capable of generating musical accompaniments and lyric captions without external karaoke equipments.

### BACKGROUND OF THE INVENTION

Conventional microphones, wire or wireless, are only designed to receive sound and convert it into electrical signals. When setting up a karaoke system, usually some external karaoke equipments are required to generate musical accompaniments and/or lyric captions. Since most conventional karaoke equipments are stationary, they are not readily portable. Therefore, the use of such karaoke systems is considerably constrained.

### SUMMARY OF THE INVENTION

The object of the present invention is to provide a portable microphone which is capable of generating musical accompaniments and lyric captions.

The above object is realized by providing a microphone with a general MIDI sound source module therein to generate accompaniments according to prestored music data, and a central processing unit (CPU) to process and display lyrics on a liquid crystal display (LCD). Because the general MIDI sound source module can be composed of integrated circuits (ICs) of small size, it can be incorporated into the microphone. Therefore, the portable microphone can be used with any amplification system to make a complete karaoke system without the need of external karaoke equipment.

The above object is fulfilled by providing an integrated karaoke microphone. The microphone comprises: (1) a general MIDI sound source module, for receiving MIDI signals and generating a first sound signal according to the internal wave table in the GM module; (2) a memory device for storing music data; (3) a microphone for receiving external acoustical input and converting it into a second electrical signal; (4) a mixer for mixing said first and second electrical signals and outputting a third electrical signal; (5) an FM modulator and RF source for modulating and outputting said third electrical signal; and (6) a CPU for retrieving said data from said memory device, translating said data into said MIDI signal, and sending said MIDI signal to said general MIDI sound source module and said memory device.

### BRIEF DESCRIPTION OF THE DRAWING

The present invention will become more fully understood from the detailed description given hereinafter and with reference to the accompanying drawings which are supplied only for illustration, and thus are not limitative of the present invention and wherein:
Figs. 1a to 1g show different views of the present invention;
Fig. 2 is a block diagram of the circuit configuration of the present invention;
Fig. 3a is a flow chart of the main program;
Fig. 3b is a flow chart of the interrupt service routine of the main program shown in Fig. 3a;
Fig. 3c is a flow chart of the key-click dispatching routine of the main program shown in Fig. 3a;
Fig. 3d is a flow chart of the play routine of the main program shown in Fig. 3a;
Fig. 4 is a flow chart for performing a song;
Fig. 5a is a perspective view of a detachable LCD caption display attached on the microphone of the present invention;
Fig. 5b is a block diagram of the circuit structure of the detachable LCD caption display shown in Fig. 5a; and
Fig. 6 is a block diagram of the circuit structure of a TV caption system.

### DETAILED DESCRIPTION OF THE PREFERRED EMBODIMENT

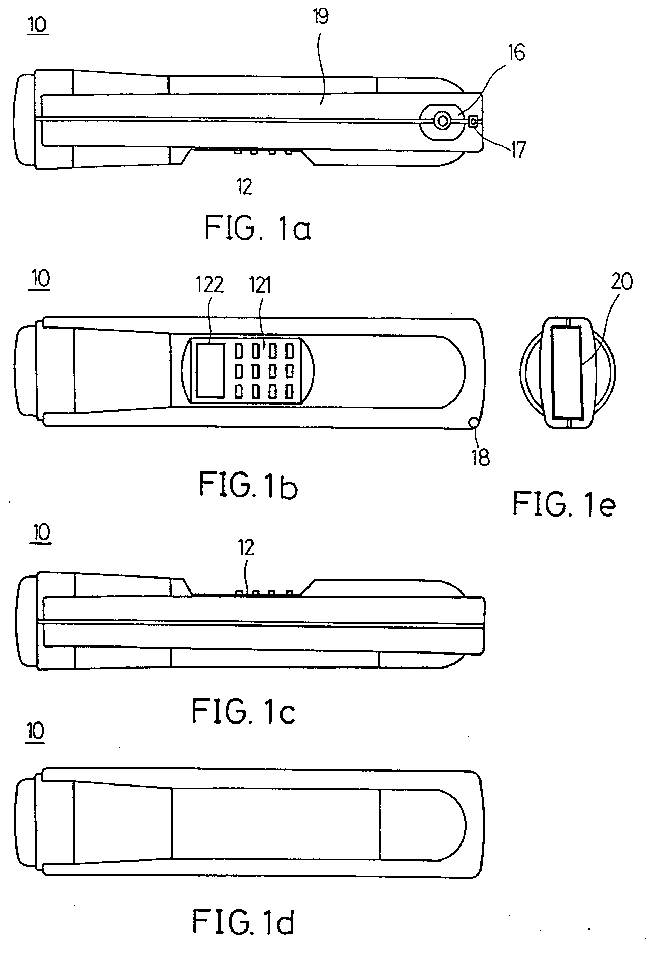

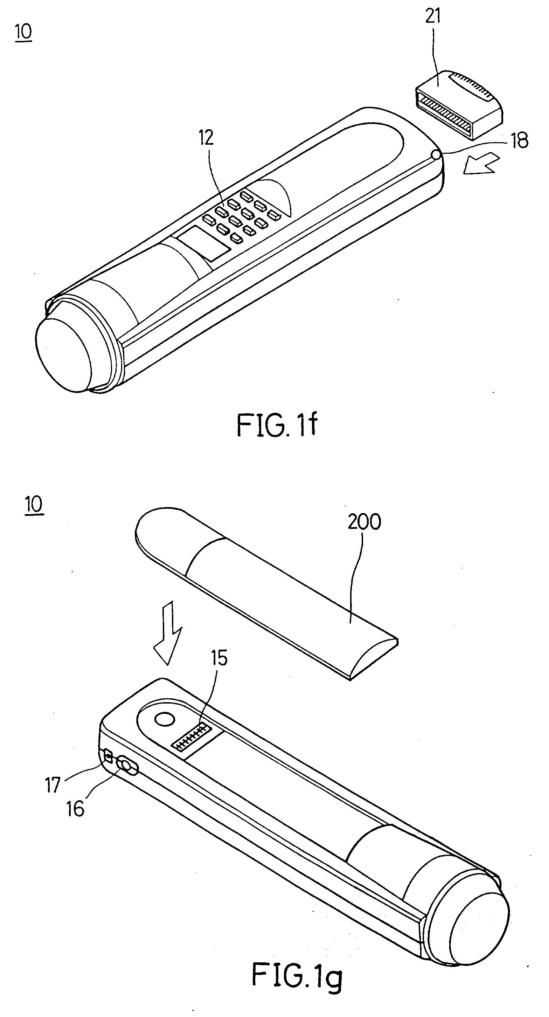

Please refer to Figs. 1a to 1g. In appearances, a wireless microphone 10 according to the present invention has a shell 19, a control panel 12, a caption system expansion slot 15, a radio-frequency (RF) output 16, a musical instrument digital interface (MIDI) port 17, an external power supply connector 18, and a read-only-memory (ROM) expansion slot 20. The control panel 12 comprises a keyboard 121 and a liquid-crystal-display (LCD) function display 122 which is shown in Fig. 1b. Keyboard 121 is used to control the microphone 10 to select or play a song, while LCD 122 displays the song and the functions or status of the microphone 10. Caption system expansion slot 15 is used to connect to a TV caption system or a detachable LCD caption display which will be discussed later. When the microphone is playing a song, lyrics of the song will be simultaneously displayed on TV or the detachable LCD caption display. RF output 16 is used to emit FM signals which are generated by the microphone 10 for wireless applications. MIDI port 17 is used to connect to a computer or a MIDI instrument to receive a MIDI signal therefrom and process it, where the microphone 10 serves as a high quality computerized sound source, and the audio output of the microphone can be conveniently transmitted to amplification systems wirelessly. ROM expansion slot 20 is used to connect an expansion cassette 21 as shown in Fig. 1f, to increase the storage of songs in the microphone 10.

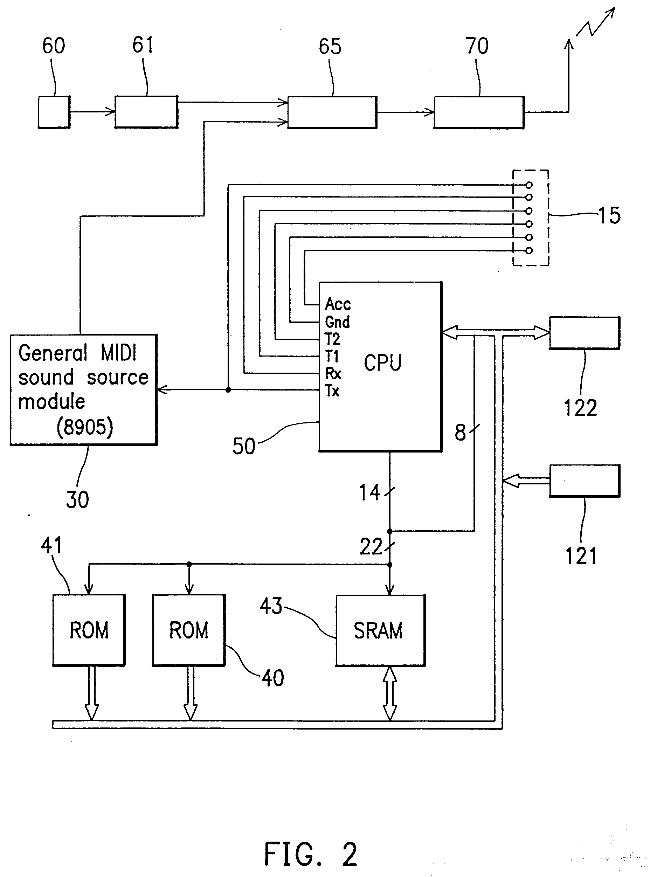

A circuit configuration for the microphone 10 which is provided within the shell 19 is shown in Fig. 2. The circuit comprises a general MIDI sound source module 30, ROMs 40 and 41, a static random-access-memory (SRAM) 43, a central processing unit (CPU) 50, a keyboard 121, a LCD function display 122, a caption system expansion slot 15, a microphone 60, an echo circuit 61, a mixer 65, and an FM modulator 70. The general MIDI sound source module 30 can be either dream 8905 or 9203 compatible chip, which receives MIDI signals from the CPU 50, and generates 16-bit stereo sounds using an internal wave table. Up to 16 or even 22 sounds can be generated at the same time. Additionally, for achieving a high quality of sound, 64 kinds of sound are sifted out from original 128 kinds of sound in general MIDI standard and stored in the wave table. When generating a sound which is not in the 64 kinds of stored sounds, a most similar sound is automatically used to replace it. In this way, the desired size of ROMs in the general MIDI sound source module 30 can be reduced, and the sampling duration of each sound can be increased to improve the sound quality. Therefore, superior sound quality can be obtained without the need of additional quality circuits, such as a digital signal processor (DSP). In this embodiment, the sampling rate of the wave table is 44.1 KHz. ROMs 40 and 41 are used to store the song data. The storage size of each ROM is 4 megabytes. ROM 40 is secured inside the microphone 10. ROM 41 is detachably mounted to the microphone 10 to increase the storage capacity of song data. Before a selected song is played, the synchronous data and the lyrics of the song are output to the external caption system or the LCD caption display. After that, pre-compressed music data of the song is decompressed into the SRAM 43. The storage size of the SRAM 43 is as high as 64 kilobytes.

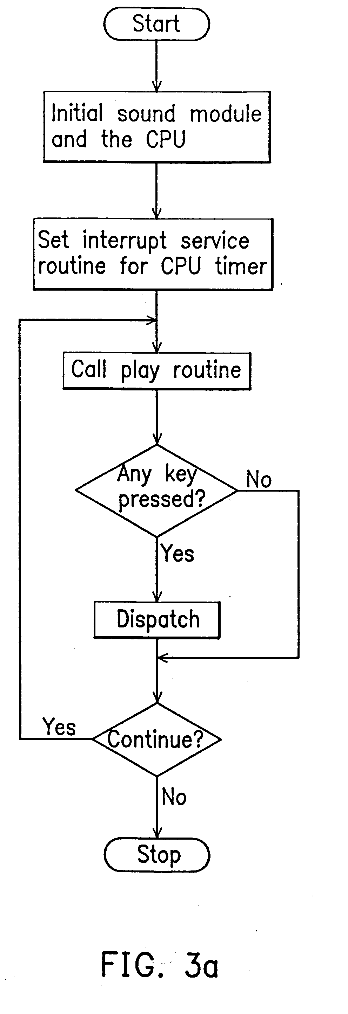

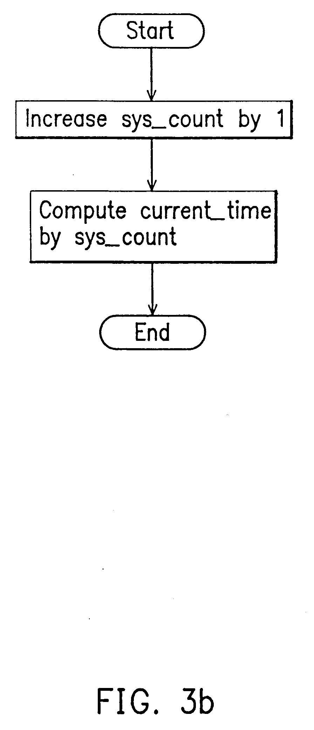

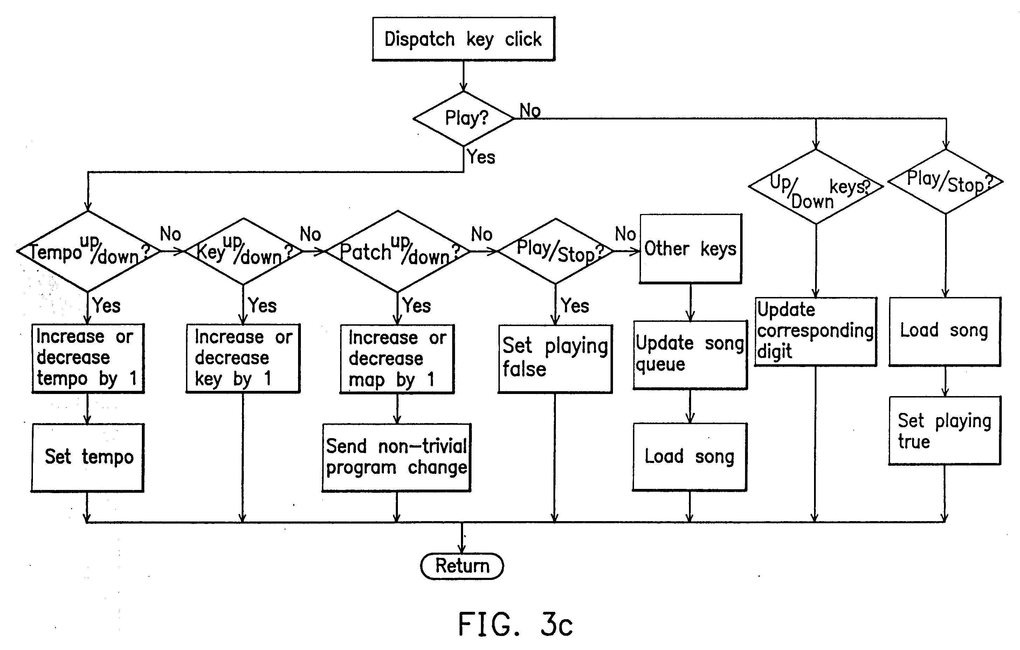

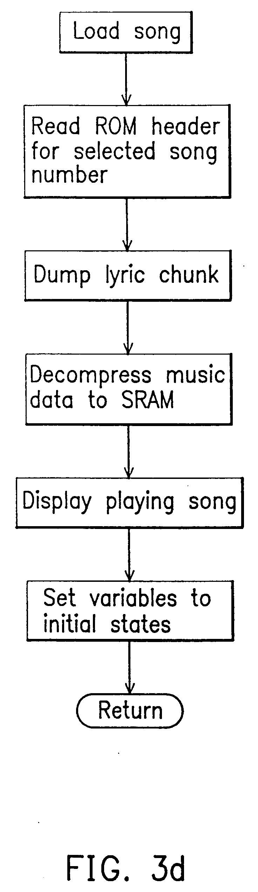

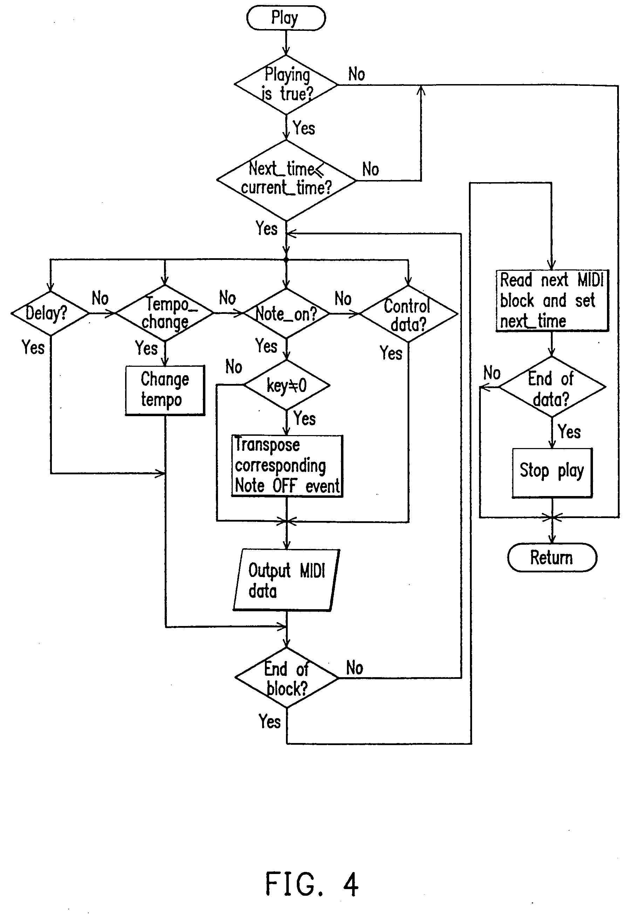

In the present embodiment, CPU 50 is a 8051 chip, which executes the main program. The flow chart of the main program is shown in Fig. 3a. Three subroutines of the main program including an interrupt service routine, a key-click dispatching routine, and a play routine are respectively shown in Figs. 3b, 3c, and 3d. These routines are described as follows:
(1) Accepts keyboard interrupt commands, and transfers data that is to be displayed to the LCD display 122 via a data bus.
(2) Outputs lyrics and synchronous data of selected songs to external TV caption system or LCD caption display.
(3) Decompresses pre-compressed music data of the selected song from the ROMs 40 or 41 into the SRAM 43.
(4) Reads out the music data in the SRAM 43 and outputs proper MIDI event(s) to the general MIDI sound source module 30. Read-time transposition can be achieved in this transfer process by the CPU 50. A flowchart of performing a song is shown in Fig. 4.
(5) When playing a song, user can change tempo, key or instrument assignments when playing a song.
(6) Saves a song into a list of selected songs or deletes it therefrom. Before saving or playing a song, it will check whether the song exists in the ROMs 40 or 41.
(7) Controls the display of lyrics and other data on the LCD display 122.

While not playing, the keyboard 121 is used to input the code of songs, or to insert or delete songs from song list. While playing a song, the user can use the keyboard 121 to transpose, change tones, or change tempo. Microphone 60 is used to receive the sound from the user, and to send it to the echo circuit 61. After adding an echo effect, the sound of the user is sent to the mixer 65 where the sound of the user is mixed with the music sound and then output to the FM modulator 70. The strength of echo effect can be adjusted by the user from the control panel 12. In the FM modulator 70, audio frequency signals, including the singer's voice and the music sound, are modulated into FM signals and then output wirely or wirelessly.

Lyrics and synchronous data is output to external caption systems via the caption system expansion slot 15. CPU 50 synchronizes the external caption systems by sending MIDI clocks. The caption systems will show the user lyric line by line and indicate the word to sing according to the MIDI clocks when playing a song.

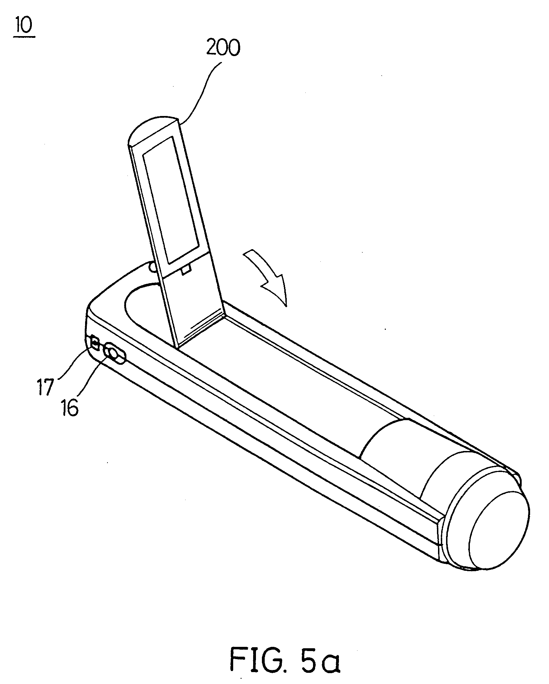

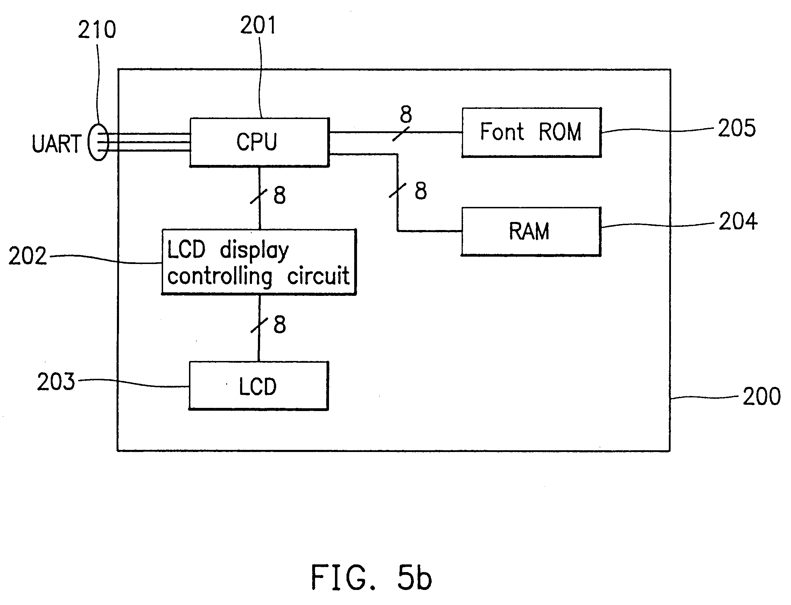

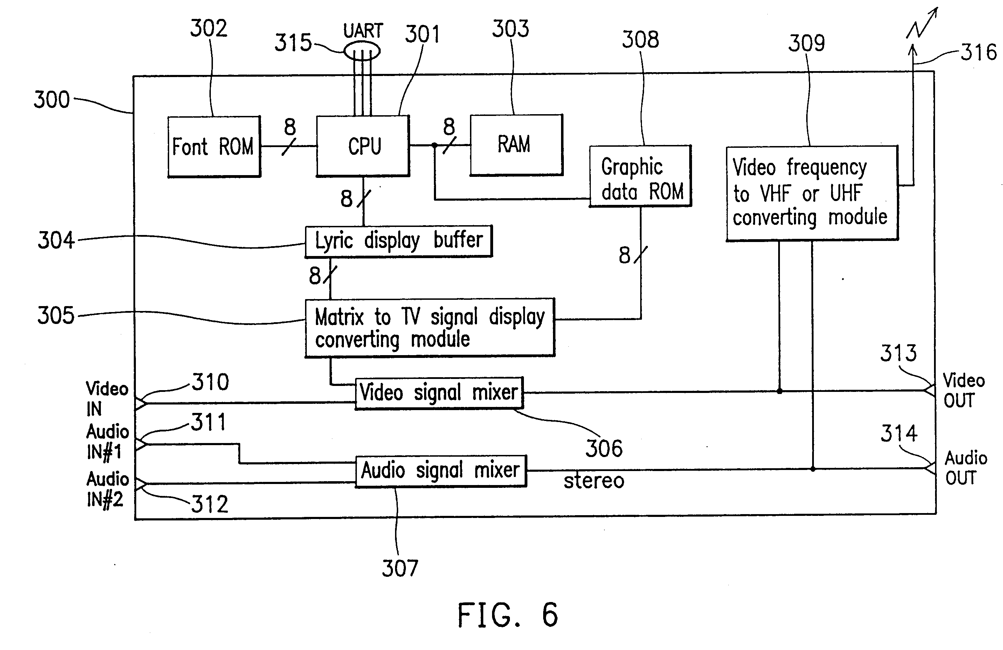

A TV caption system 300 or a detachable LCD caption display 200 can be used to display lyrics. As shown in Fig. 5a, detachable LCD caption display 200 can be attached to the microphone 10. The connector of the detachable LCD caption display 200 is inserted into the caption system expansion slot 15. The user can turn the LCD caption display 200 up or down to read the lyrics shown thereon. Fig. 5 shows the structure of the LCD caption display 200, including a CPU 201, a ROM 205 for storing character fonts, an LCD display controlling circuit 202, a random-access-memory (RAM) 204, and a LCD 203. The LCD caption display 200 is connected to the caption system expansion slot 15 via a universal asynchronous receiver/transmitter (UART) 210. The structure of the TV caption system 300 is shown in Fig. 6, including a CPU 301, a ROM 302 for storing character fonts, a RAM 303, a character display buffer 304, a ROM 308 for storing graphic data, a display matrix to TV signal converting module 305, a video frequency to the very high frequency (VHF) or the ultra high frequency (UHF) converting module 309, a video signal mixer 306, an audio signal mixer 307, an antenna 316, and a UART port 315. The TV caption system 300 further comprises a video signal input 310, two stereo audio signal inputs 311 and 312, a video signal output 313, and a stereo audio signal output 314. Video signals can be converted into VHF or UHF signals and then emitted by the antenna 316. The TV caption system 300 is connected to the caption system expansion slot 15 via the UART 315 port. The ROM 308 is used to store some static graphic images which are shown as the background on a TV together with the lyrics when no video source is found in video signal input 310.

While the invention has been described by way of examples and in terms of a preferred embodiment, it is to be understood that the invention need not be limited to the disclosed embodiment. On the contrary, it is intended to cover various modifications and similar arrangements included within the spirit and scope of the appended claims, the scope of which should be accorded the broadest interpretation so as to encompass all such modifications and similar structures.

## Claims

1. A microphone, comprising:
a general MIDI sound source module, for receiving a MIDI signal and generating a first electrical signal of a musical accompaniment according to a wave table and said MIDI signal;
a memory device for storing song data;
a microphone for receiving external acoustical input and converting it into a second electrical signal;
a mixer for mixing said first and second electrical signals and outputting a third electrical signal;
a CPU for retrieving said data from said memory device, translating said data into said MIDI signal, and sending said MIDI signal to said general MIDI sound source module and said memory device.

2. A microphone as claimed in claim 1, further comprising a SRAM device where said CPU decodes and stores said data.

3. A microphone as claimed in claim 1, further comprising a keyboard for controlling the microphone.

4. A microphone as claimed in claim 1, further comprising a LCD to display lyrics which are decoded by said CPU from said data.

5. A microphone as claimed in claim 1, further comprising a caption system expansion slot for outputting lyrics and synchronous data which are decoded by said CPU from said data.

6. A microphone as claimed in claim 1, wherein said memory device comprises a fixed ROM and a detachable ROM.

7. A microphone as claimed in claim 1, further comprising an FM modulator and RF source for modulating and outputting said third electrical signal.

8. A microphone as claimed in claim 5, further comprising a detachable LCD caption display which can be connected with the microphone via said caption system expansion slot.

9. A microphone as claimed in claim 5, further comprising a TV caption system which can be connected with the microphone via said caption system expansion slot.

10. A microphone as claimed in claim 8, wherein said LCD caption display is capable of being turned up or down.

11. A microphone as claimed in claim 8, wherein said LCD caption display comprises a CPU, a ROM for storing fonts of characters, an LCD display controlling circuit, a RAM, and an LCD.

12. A microphone as claimed in claim 1, wherein said TV caption system comprises a CPU, a ROM for storing character fonts, a RAM, a character display buffer, a ROM for storing graphic data, a matrix to TV signal conversion module, a video frequency to VHF or UHF conversion module, a video signal mixer, an audio signal mixer, and an antenna.

13. A microphone as claimed in claim 12, wherein a stationary graphic image is stored in said ROM for storing graphic data and output when no video source is found in said TV caption system.
